# EUROPEAN PATENT SPECIFICATION

(11) **EP 1 752 752 B1**
(45) Date of publication and mention of the grant of the patent: **28.12.2016**
(21) Application number: 06118486.7
(22) Date of filing: 04.08.2006
(51) Int. Cl.: G01L 25/00, G01L 3/10

(54) **A method of calibrating a magnetoelastic torque sensor**
Verfahren zur Kalibrierung eines magnetoelastischen Drehmomentsensor
Procédé d'étalonnage d'un capteur de couple magnéto-élastique

(30) Priority: 12.08.2005 US 708063 P; 14.12.2005 US 302911
(43) Date of publication of application: 14.02.2007
(73) Proprietor: Continental Automotive Systems, Inc., Auburn Hills, MI 48326 (US)
(72) Inventor: Cripe, David Wayne, Chatham, IL 62629 (US)
(74) Representative: Bonn, Roman Klemens

(56) References cited:
- EP-A- 0 756 165
- EP-A- 1 293 765
- EP-A2- 0 480 912
- WO-A1-00/57150
- DE-A- 3 331 708
- US-A- 4 596 150
- US-A- 5 483 820

## Description

This invention generally relates to a method of calibrating a magnetometer for a torque sensor. More particularly, this invention relates to a method of calibrating a magnetometer for a torque sensor for decreasing variability.

A type of torque sensor includes a transducer element that includes a magnetoelastic material containing two adjacent, oppositely circumferentially magnetically polarized axial regions, that each produces a magnetic field responsive to an applied force. This magnetic field is divergent in nature, for detection by a magnetometer circuit configured as a magnetic gradiometer. The generated magnetic field is then detected by the magnetometer that provides an output signal indicative of an applied force, and provides a minimal sensitivity to non-divergent extraneous magnetic fields, such as that of the Earth.

A known magnetometer for application with such a torque transducer includes independent magnetometer sections corresponding to an upper and lower axial section of the torque transducer. The voltage difference of these two outputs provide the gradiometric senor output. Disadvantageously, although the individual magnetometer sections are produced to the same specifications, some differences occur and therefore can cause an asymmetrical sensitivity of the magnetic sense elements allowing non-zero sensitivity of the sensor to non-divergent magnetic fields. Such a phenomenon reduces the reliability and accuracy of the sensor. Further, hysteresis present within the magnetoelastic element may also prevent the transducer from returning to an original zero point after the application and subsequent removal of a force stimulus, also disrupting and reducing sensor accuracy.

EP 0 480 912 A2 describes a torque measuring device which is corrected for temperature and time dependent changes by zero point adjustment, balance correction and sensitivity correction.

US 5 483 820 A describes a method of zero correction in torque sensors based on threshold values.

US 4 596 150 A describes contact free measurement of stress, temperature, torque and other conditions which affect magnetic properties of the test object.

EP 0 756 165 A2 describes a method and device for calibrating a torque transducer device.

EP 1 293 765 A2 describes a method for calibrating a dynamometer of a test station for internal combustion engines.

DE 33 31 708 A1 describes a device for checking and/or calibrating a torque transducer device.

Accordingly, it is desirable to design and develop a method of calibrating a magnetometer that highly attenuates the sensitivity of the sensor to unwanted, extraneous magnetic fields.

It is also desirable to design and develop a method of calibrating a torque sensor magnetometer that corrects for hysteresis that may be present within the magnetoelastic sense element.

In accordance with the present invention a method of calibrating a magnetoelastic torque sensor comprises the steps of mating a torque transducer with a magnetometer, wherein the magnetometer includes at least two channels that receive signals indicative of a magnetic field generated by the torque transducer responsive to application of torque; applying a desired magnitude of torque to the force transducer at each of a plurality of defined calibration points, wherein the defined calibration points include a maximum applied torque in the first direction, a first zero point recorded after release of the maximum torque in the first direction, a maximum applied torque in a second direction opposite the first direction, and a second zero point recorded after a release of the maximum torque from the second direction; recording output signals indicative of a magnetic field generated at each of the defined calibration points communicated to each of the at least two channels; pointing the magnetoelastic torque sensor toward magnetic north and storing a north output value for each of the at least two channels; pointing the magnetoelastic torque sensor toward magnetic south and storing a south output value for each of the two channels; determining a hysteresis value, a span between an output at each calibration point received by each of the two channels, and a hysteresis correction value according to a relationship between the span of the output and the hysteresis value; and determining a correction factor for each of the at least two channels based on determined hysteresis value and hysteresis correction value.

Preferably the magnetometer comprises a microcontroller and the at least two channels receive a signal from a first coil and a second magnetic sense element disposed to detect the magnetic field generated by the torque transducer.

Preferably the correction factor is determined relative to a ratio between the north output value and the south output value.

Preferably the method includes determining a gain for each of the two channels such that a ratio between the first channel and the second channel is equal to a ratio between north output value and the south output value.

Preferably the determination of the hysteresis correction value includes combining the span with a backlash value indicative of a difference between a hysteresis containing signal and a desired output value.

Preferably, the torque transducer comprises a torque transducer including a magnetoelastic material that generates a magnetic field responsive to an applied torque; wherein the at least two channels are channels of a microcontroller; wherein the step of applying a desired magnitude of torque comprises applying a positive torque substantially equal to a positive full scale force value of the torque transducer;
and applying a negative torque substantially equal to a negative full scale force value for the torque transducer; wherein the recorded output signal values correspond to the positive full scale force and the negative full scale torque; and wherein the correction factor comprises an individual gain for each of the at least two channels of the microcontroller, such that when summed each of the at least two channels provide the desired span sensitivity for the sensor system.

Preferably the method includes recording output values to each of the at least two channels indicative of a release of torque from each of the positive full scale torque value and the negative full scale value.

Preferably the method includes recording output values to each of the at least two channels with the torque transducer assembly directed toward magnetic north and separately with the torque transducer directed toward magnetic south.

Preferably the individual gains for each of the at least two channels is determined to equal a ratio between output values with the torque transducer directed north and the torque transducer directed south.

Preferably the method includes determining a value indicative of hysteresis utilizing the outputs communicated to each of the at least two channels responsive to application of the positive and negative torque, and release of torque.

Preferably the method includes the step of determining a hysteresis correction coefficient based on the determined hysteresis value.

Preferably the method includes the step of determining a span sensitivity coefficient for the torque transducer assembly utilizing a relationship between the hysteresis correction coefficient and a difference between outputs communicated to each of the at least two channels.

An example torque sensor assembly calibrated according to the method steps of this invention includes a torque transducer with a magnetoelastic ring. The magnetoelastic ring produces a divergent magnetic field responsive to the application of torque. A magnetometer assembly includes at least two sense elements disposed adjacent to the torque transducer.

The method includes the initial step of mating the torque transducer with the magnetometer. The magnetometer includes at least two channels that receive the signals indicative of the magnetic field generated by the torque transducer responsive to application of torque.

A series of known forces are applied to the torque transducer and recorded as calibration points. The calibration points are indicative of a magnetic field generated by the magnetoelastic ring. The gain of each of the channels is then matched so that when they are summed there is no sensitivity to ambient magnetic fields. Calibration coefficients are then determined for each channel such that the ratio between the gain in the channels is equal to a ratio between differential voltages obtained with the torque transducer assembly pointing sequentially toward a north and south polar, non-divergent magnetic field.

Subsequently coefficients used for compensation for system hysteresis are calculated based on measured hysteresis of the system measured as the shift in zero-force output of the system prior to and after application of a stimulus torque.

Temperature compensation of the sensor system is also provided by allowing these coefficients to be modified according to the measured value of an associated temperature sensor.

Accordingly, the method according to this invention provides for improved accuracy of a torque sensor assembly and magnetometer. These and other features of the present invention can be best understood from the following specification and drawings, the following of which is a brief description.
Figure 1 is a schematic illustration of an example torque transducer for calibrating according to the method of this invention.
Figure 2 is a graph illustrating an example relationship between an applied force and an output voltage for an example torque transducer; and,
Figure 3 is a schematic illustration of an example of method steps for calibrating a torque transducer according to this invention.

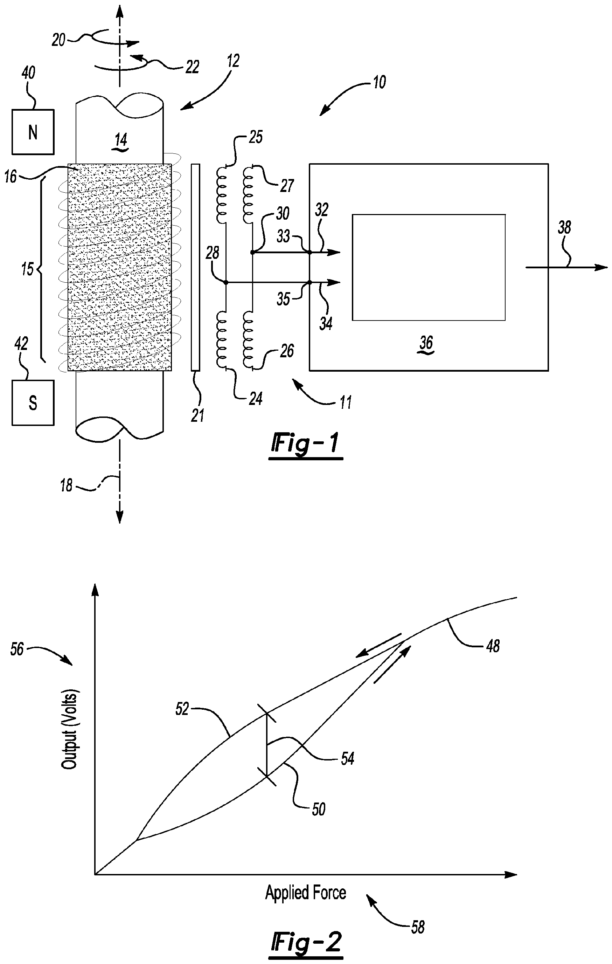

Referring to Figure 1, a torque sensor assembly 10 is schematically shown and includes a torque transducer 12 disposed about an axis 18. The torque transducer 12 includes a shaft 14 with a magnetoelastic ring 16. The magnetoelastic ring 16 produces a magnetic field 15 responsive to the application of torque on the shaft 14. A magnetometer assembly 11 includes an inductor 21 disposed adjacent the torque transducer 12 that is magnetically saturated by a coil assembly. The coil assembly includes upper inner and outer coils 25, 27 and lower inner and outer coils 24, 26. The inner coils 25, 24 are configured to generate a magnetic field equal and opposite to a magnetic field generated by the outer coils 26, 27.

A controller 36 energizes the coils 24, 25, 26, 27 with an alternating current to generate an alternating magnetic field. The alternating magnetic field causes a magnetic saturation of the inductor 21. When a torque is applied to the torque transducer 12, the generated magnetic field 15 is superimposed on to the inductor 21. The superimposition of the magnetic field 15 causes an asymmetry in magnetic fields between upper coils 25, 27 and the lower coils 24, 26. The asymmetry is detected as a voltage signal across nodes 28, 30. The voltage signals 32, 34 are then utilized to determine a magnitude of applied torque.

Accurate operation of the torque transducer assembly 10 depends on the alignment and calibration of the coil assembly with the torque transducer 12. A method according to this invention provides for the accurate calibration of the torque transducer to the coil assembly and the controller 36. This is accomplished by mating the torque transducer 12 with the controller 36 and then determining a series of calibration coefficients.

Referring to Figure 2, calibration of the torque transducer 12 provides for the accommodation of hysteresis in the sensor assembly. Figure 2 is a graph representing a relationship 48 between an applied force 58, and a voltage output 56. The application of a force in a first direction provides a relationship between force and output indicated by line 50. The release of force from a high point results in another relationship indicated at 52. A gap 54 between the relationship for the application of force 50 and the release of force 52 can cause undesirable inaccuracies. However, this gap 54 can be calibrated and accommodated by the method according to this invention.

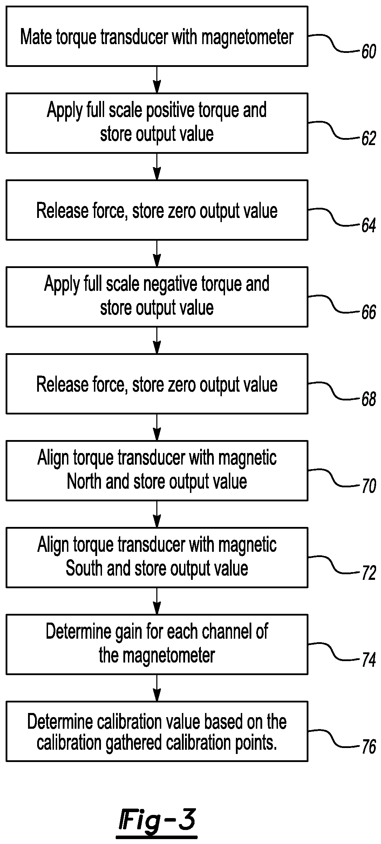

Referring to Figure 3, the method includes the initial step of mating the force transducer 12 with the magnetometer 11 as indicated at 60. The magnetometer 11 includes at least two channels 33, 35 that receive the signals 32, 34 indicative of the magnetic field 15 generated by the force transducer 12 responsive to application of force. A first known force 20 is applied to the torque transducer 12 in a first direction as is indicated at 62. This provides a calibration point. In this example the first force comprises a full-scale positive torque applied to the torque transducer 12. The first force 20 is then released and the torque transducer 12 allowed to move back to a zero position as indicated at 64. A voltage output is recorded at this zero-force point as another calibration point. A second force 22 is applied to the torque transducer 12 in a second direction opposite to the first direction and another calibration point is recorded as is indicated at 66 and 68. In this example, the second force 22 is a full force in a negative torque direction. The calibration points are voltage values that are indicative of a magnetic field generated by the magnetoelastic ring 16. The calibration points also reveal any difference that may be present between the actual applied force value 20, 22 and the actual reading obtained from the torque transducer.

The gain of each of the channels 33, 35 can then be matched so that when they are summed there is no sensitivity to ambient magnetic fields. Output values are obtained with the torque transducer assembly 10 facing a magnetic north pole 40 and a magnetic south pole 42 (Figure 1) as indicated at 70 and 72. Accordingly, calibration points are required for pointing the torque transducer assembly 10 toward magnetic north 40 and taking a calibration point. Further, the torque transducer 12 is then pointed in a direction indicative of magnetic south 42 and another calibration point determined. The calibration points are determined as an output value for each of the outputs 32 and 34 from each of the nodes 28, 30.

A correction factor or bias is then determined as indicated at 74 such that the ratio between the gain in the channels 33 and 35 is equal to a ratio between differential voltages obtained with the torque transducer assembly 12 pointing toward the north 40 and south 42. That is a gain for each of the two channels 28,30 is set such that a ratio between the first channel 28 and the second channel 30 is equal to a ratio between an output value with the torque transducer assembly 10 facing north and an output value with the torque transducer facing toward the south magnetic pole 42.

The method also includes the step of determining a hysteresis value based on the calibration values obtained from the first and second forces 20, 22 as is indicated at 76. This is accomplished by determining a span between output values 32, 34 for each calibration point received by each of the two channels 33, 35. Utilizing the span, a calibration coefficient or correction value is determined as a percentage of the span. The determination of the hysteresis correction value includes combining the span with a backlash value indicative of a difference between a hysteresis-containing signal and a desired output value.

The hysteresis correction values are determined using known mathematical compensation techniques such as Prandt-Ishlinskyi Operators. As appreciated, the specific mathematical techniques for determining the hysteresis correction factors are application specific and tailored to the specific torque transducer assembly 10. The method also includes determination of a temperature coefficient of the sensor system. The determination of temperature coefficient provides a correction factor to accommodate operation at varying temperatures and the effects that such temperature changes have on output voltages to the channels 33 and 35. Temperature compensation values are determined by obtaining temperature values at known time intervals along with voltage values. A thermal correction factor is then determined utilizing known relationships between temperature, resistance and voltage and applied to the outputs 32, 34.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A method of calibrating a magnetoelastic torque sensor (10) comprising the steps of:
a) mating a torque transducer (12) with a magnetometer (11), wherein the magnetometer (11) includes at least two channels (33, 35) that receive signals indicative of a magnetic field (15) generated by the torque transducer (12) responsive to application of torque. (20, 22);
b) applying a desired magnitude of torque (20, 22) to the torque transducer (12) at each of a plurality of defined calibration points, wherein the defined calibration points include a maximum applied torque (20) in the first direction, a first zero point recorded after release of the maximum torque (20) in the first direction, a maximum applied torque (22) in a second direction opposite the first direction, and a second zero point recorded after a release of the maximum torque (22) from the second direction;
c) recording output signals indicative of a magnetic field (15) generated at each of the defined calibration points communicated to each of the at least two channels (33, 35);
d) pointing the magnetoelastic torque sensor (10) toward magnetic north (40) and storing a north output value for each of the at least two channels (33, 35),
e) pointing the magnetoelastic torque sensor (10) toward magnetic south (42) and storing a south output value for each of the two channels (33, 35);
f) determining a hysteresis value, a span between an output at each calibration point received by each of the two channels (33, 35), and a hysteresis correction value according to a relationship between the span of the output and the hysteresis value; and
g) determining a correction factor for each of the at least two channels (33, 35) based on the determined hysteresis value and hysteresis correction value.

2. The method as recited in claim 1, wherein the magnetometer (11) comprises a microcontroller and the at least two channels (33, 35) receive a signal from a first coil and a second magnetic sense element disposed to detect the magnetic field (15) generated by the torque transducer (12).

3. The method as recited in claim 1, wherein the correction factor is determined relative to a ratio between the north output value and the south output value.

4. The method as recited in claim 1, including determining a gain for each of the two channels (33, 35) such that a ratio between the first channel (33) and the second channel (35) is equal to a ratio between north output value and the south output value.

5. The method as recited in claim 1, wherein the determination of the hysteresis correction value includes combining the span with a backlash value indicative of a difference between a hysteresis containing signal and a desired output value.

6. A method according to claim 1,
wherein the torque transducer (10) comprises a torque transducer (12) including a magnetoelastic material that generates a magnetic field (15) responsive to an applied torque (20, 22);
wherein the at least two channels (33, 35) are channels of a microcontroller (36); wherein the step of applying a desired magnitude of torque comprises applying a positive torque (20) substantially equal to a positive full scale torque value of the torque transducer (12); and applying a negative torque (22) substantially equal to a negative full scale torque value for the torque transducer (12);
wherein the recorded output signal values correspond to the positive full scale torque and the negative full scale torque; and
wherein the correction factor comprises an individual gain for each of the at least two channels (33, 35) of the microcontroller, such that when summed each of the at least two channels provide the desired span sensitivity for the sensor system.

7. The method as recited in claim 6, including recording output values to each of the at least two channels indicative of a release of torque from each of the positive full scale torque value and the negative full scale value.

8. The method as recited in claim 7, including recording output values to each of the at least two channels (33, 35) with the torque transducer (12) directed toward magnetic north (40) and separately with the torque transducer (12) directed toward magnetic south (42).

9. The method as recited in claim 8, wherein a ratio of the individual gains for each of the at least two channels (33, 35) is determined to equal a ratio between output values with the torque transducer (12) directed north and the torque transducer (12) directed south.

10. The method as recited in claim 9, including determining a value indicative of hysteresis utilizing the outputs communicated to each of the at least two channels (33, 35) responsive to application of the positive and negative torque (20, 22), and release of torque (20, 22).

11. The method as recited in claim 10, including the step of determining a hysteresis correction coefficient based on the determined hysteresis value.

12. The method as recited in claim 11, including the step of determining a span sensitivity coefficient for the torque transducer assembly (10) utilizing a relationship between the hysteresis correction coefficient and a difference between outputs communicated to each of the at least two channels (33, 35).

## Patentansprüche

1. Verfahren zum Kalibrieren eines magnetoelastischen Drehmomentsensors (10), wobei das Verfahren die folgenden Schritte umfasst:
a) Zusammenfügen eines Drehmomentwandlers (12) mit einem Magnetometer (11), wobei das Magnetometer (11) wenigstens zwei Kanäle (33, 35) enthält, die Signale empfangen, die ein durch den Drehmomentwandler (12) in Ansprechen auf das Anlegen eines Drehmoments (20, 22) erzeugtes Magnetfeld (15) angeben;
b) Anlegen eines gewünschten Betrags des Drehmoments (20, 22) an den Drehmomentwandler (12) bei jedem von mehreren definierten Kalibrierungspunkten, wobei die definierten Kalibrierungspunkte ein maximales angelegtes Drehmoment (20) in der ersten Richtung, einen nach Lösen des maximalen Drehmoments (20) in der ersten Richtung aufgezeichneten ersten Nullpunkt, ein maximales angelegtes Drehmoment (22) in einer zweiten Richtung, die zu der ersten Richtung entgegengesetzt ist, und einen nach Lösen des maximalen Drehmoments (22) von der zweiten Richtung aufgezeichneten zweiten Nullpunkt enthalten;
c) Aufzeichnen von Ausgangssignalen, die ein bei jedem der definierten Kalibrierungspunkte erzeugtes Magnetfeld (15), das an jeden der wenigstens zwei Kanäle (33, 35) übermittelt wird, angeben;
d) Richten des magnetostatischen Drehmomentsensors (10) auf den magnetischen Nordpol (40) und Speichern eines Nord-Ausgabewerts für jeden der wenigstens zwei Kanäle (33, 35),
e) Richten des magnetoelastischen Drehmomentsensors (10) auf den magnetischen Südpol (42) und Speichern eines Süd-Ausgabewerts für jeden der zwei Kanäle (33, 35);
f) Bestimmen eines Hysteresewerts, einer Spanne zwischen einer durch jeden der zwei Kanäle (33, 35) empfangenen Ausgabe bei jedem Kalibrierungspunkt und eines Hysteresekorrekturwerts in Übereinstimmung mit einer Beziehung zwischen der Spanne der Ausgabe und dem Hysteresewert; und
g) Bestimmen eines Korrekturfaktors für jeden der wenigstens zwei Kanäle (33, 35) auf der Grundlage des bestimmten Hysteresewerts und Hysteresekorrekturwerts.

2. Verfahren nach Anspruch 1, wobei das Magnetometer (11) einen Mikrocontroller umfasst und wobei die wenigstens zwei Kanäle (33, 35) ein Signal von einer ersten Spule und von einem zweiten Magneterfassungselement, das so angeordnet ist, dass es das durch den Drehmomentwandler (12) erzeugte Magnetfeld (15) detektiert, empfangen.

3. Verfahren nach Anspruch 1, wobei der Korrekturfaktor relativ zu einem Verhältnis zwischen dem Nord-Ausgabewert und dem Süd-Ausgabewert bestimmt wird.

4. Verfahren nach Anspruch 1, das das Bestimmen einer Verstärkung für jeden der zwei Kanäle (33, 35) in der Weise enthält, dass ein Verhältnis zwischen dem ersten Kanal (33) und dem zweiten Kanal (35) gleich einem Verhältnis zwischen dem Nord-Ausgabewert und dem Süd-Ausgabewert ist.

5. Verfahren nach Anspruch 1, wobei die Bestimmung des Hysteresekorrekturwerts das Kombinieren der Spanne mit einem Spielraumwert, der eine Differenz zwischen einem Signal, das eine Hysterese enthält, und einem gewünschten Ausgabewert angibt, enthält.

6. Verfahren nach Anspruch 1,
wobei der Drehmomentwandler (10) einen Drehmomentwandler (12) umfasst, der ein magnetoelastisches Material enthält, das in Ansprechen auf ein angelegtes Drehmoment (20, 22) ein Magnetfeld (15) erzeugt;
wobei die wenigstens zwei Kanäle (33, 35) Kanäle eines Mikrocontrollers (36) sind;
wobei der Schritt des Anlegens eines gewünschten Betrags eines Drehmoments das Anlegen eines positiven Drehmoments (20), das im Wesentlichen gleich einem positiven Vollausschlag-Drehmomentwert des Drehmomentwandlers (12) ist, umfasst; und das Anlegen eines negativen Drehmoments (22), das im Wesentlichen gleich einem negativen Vollausschlag-Drehmomentwert für den Drehmomentwandler (12) ist, umfasst;
wobei die aufgezeichneten Ausgangssignalwerte dem positiven Vollausschlagdrehmoment und dem negativen Vollausschlagdrehmoment entsprechen; und
wobei der Korrekturfaktor für jeden der wenigstens zwei Kanäle (33, 35) des Mikrocontrollers eine eigene Verstärkung umfasst, so dass jeder der wenigstens zwei Kanäle, wenn sie summiert werden, die gewünschte Empfindlichkeitsspanne für das Sensorsystem bereitstellt.

7. Verfahren nach Anspruch 6, das das Aufzeichnen von Ausgabewerten für jeden der wenigstens zwei Kanäle, die ein Lösen des Drehmoments sowohl von dem positiven Vollausschlag-Drehmomentwert als auch von dem negativen Vollausschlag-Drehmomentwert angeben, enthält.

8. Verfahren nach Anspruch 7, das das Aufzeichnen von Ausgabewerten für jeden der wenigstens zwei Kanäle (33, 35) mit dem Drehmomentwandler (12), der auf den magnetischen Nordpol (40) gerichtet ist, und getrennt mit dem Drehmomentwandler (12), der auf den magnetischen Südpol (42) gerichtet ist, enthält.

9. Verfahren nach Anspruch 8, wobei ein Verhältnis der einzelnen Verstärkungen für jeden der wenigstens zwei Kanäle (33, 35) so bestimmt wird, dass es gleich einem Verhältnis zwischen den Ausgabewerten, bei denen der Drehmomentwandler (12) nach Norden gerichtet ist und bei denen der Drehmomentwandler (12) nach Süden gerichtet ist, ist.

10. Verfahren nach Anspruch 9, das das Bestimmen eines Werts, der eine Hysterese angibt, unter Nutzung der Ausgaben, die in Ansprechen auf das Anlegen des positiven und des negativen Drehmoments (20, 22) und das Lösen des Drehmoments (20, 22) an jeden der wenigstens zwei Kanäle (33, 35) übermittelt werden, enthält.

11. Verfahren nach Anspruch 10, das den Schritt des Bestimmens eines Hysteresekorrekturkoeffizienten auf der Grundlage des bestimmten Hysteresewerts enthält.

12. Verfahren nach Anspruch 11, das den Schritt des Bestimmens eines Empfindlichkeitsspannenkoeffizienten für die Drehmomentwandleranordnung (10) unter Nutzung einer Beziehung zwischen dem Hysteresekorrekturkoeffizienten und einer Differenz zwischen Ausgaben, die an jeden der wenigstens zwei Kanäle (33, 35) übermittelt werden, enthält.

## Revendications

1. Procédé d'étalonnage d'un capteur de couple magnéto-élastique (10), le procédé comprenant les étapes consistant à :
a) accoupler un transducteur de couple (12) à un magnétomètre (11), lequel magnétomètre (11) comporte au moins deux voies (33, 35) qui reçoivent des signaux indiquant un champ magnétique (15) généré par le transducteur de couple (12) en réaction à l'application d'un couple (20, 22) ;
b) appliquer une intensité souhaitée du couple (20, 22) au transducteur de couple (12) en chacun d'une pluralité de points d'étalonnage définis, lesquels points d'étalonnage définis comportent un couple appliqué maximal (20) dans le premier sens, un premier point zéro enregistré après relâchement du couple maximal (20) dans le premier sens, un couple maximal appliqué (22) dans un deuxième sens contraire au premier sens et un deuxième point zéro enregistré après relâchement du couple maximal (22) dans le deuxième sens ;
c) enregistrer des signaux de sortie indiquant un champ magnétique (15) généré en chacun des points d'étalonnage définis communiqués à chacune desdites au moins deux voies (33, 35) ;
d) pointer le capteur de couple magnéto-élastique (10) en direction du nord magnétique (40) et mémoriser une valeur de sortie au nord pour chacune desdites au moins deux voies (33, 35) ;
e) pointer le capteur de couple magnéto-élastique (10) en direction du sud magnétique (42) et mémoriser une valeur de sortie au sud pour chacune desdites au moins deux voies (33, 35) ;
f) déterminer une valeur d'hystérésis, une étendue entre une sortie en chaque point d'étalonnage reçue par chacune des deux voies (33, 35) et une valeur de correction d'hystérésis selon une relation entre l'étendue de la sortie et la valeur d'hystérésis ; et
g) déterminer un facteur de correction pour chacune desdites au moins deux voies (33, 35) en fonction de la valeur d'hystérésis et de la valeur de correction d'hystérésis déterminées.

2. Procédé selon la revendication 1, dans lequel le magnétomètre (11) comprend un microcontrôleur et lesdites au moins deux voies (33, 35) reçoivent un signal provenant d'une première bobine et un deuxième élément capteur magnétique agencé de manière à détecter le champ magnétique (15) généré par le transducteur de couple (12).

3. Procédé selon la revendication 1, dans lequel le facteur de correction est déterminé relativement à un rapport entre la valeur de sortie au nord et la valeur de sortie au sud.

4. Procédé selon la revendication 1, comportant l'étape consistant à déterminer un gain pour chacune des deux voies (33, 35) de manière à rendre un rapport entre la première voie (33) et la deuxième voie (35) égal à un rapport entre la valeur de sortie au nord et la valeur de sortie au sud.

5. Procédé selon la revendication 1, dans lequel l'étape consistant à déterminer la valeur de correction d'hystérésis comporte l'étape consistant à combiner l'étendue à une valeur de battement indiquant une différence entre un signal contenant une hystérésis et une valeur de sortie souhaitée.

6. Procédé selon la revendication 1,
dans lequel le transducteur de couple (10) comprend un transducteur de couple (12) comportant une matériau magnéto-élastique qui génère un champ magnétique (15) en réaction à un couple appliqué (20, 22) ;
dans lequel lesdites au moins deux voies (33, 35) sont des voies d'un microcontrôleur (36) ;
dans lequel l'étape consistant à appliquer une intensité souhaitée du couple comprend les étapes consistant à appliquer un couple positif (20) sensiblement égal à une valeur de couple positif à pleine échelle du transducteur de couple (12) ; et appliquer un couple négatif (22) sensiblement égal à une valeur de couple négatif à pleine échelle pour le transducteur de couple (12) ;
dans lequel les valeurs des signaux de sortie enregistrés correspondent au couple positif à pleine échelle et au couple négatif à pleine échelle ; et
dans lequel le facteur de correction comprend un gain individuel pour chacune desdites au moins deux voies (33, 35) du microcontrôleur, de manière à ce que, une fois sommées, lesdites au moins deux voies procurent chacune la sensibilité d'étendue souhaitée pour le système capteur.

7. Procédé selon la revendication 6, comportant l'étape consistant à enregistrer des valeurs de sortie pour chacune desdites au moins deux voies indiquant un relâchement du couple par rapport à chacune des valeurs de couple positif à pleine échelle et de couple négatif à pleine échelle.

8. Procédé selon la revendication 7, comportant l'étape consistant à enregistrer des valeurs de sortie pour chacune desdites au moins deux voies (33, 35) en orientant le transducteur de couple (12) vers le nord magnétique (40) et, séparément, en orientant le transducteur de couple (12) vers le sud magnétique (42).

9. Procédé selon la revendication 8, dans lequel un rapport des gains individuels pour chacune desdites au moins deux voies (33, 35) est déterminé de manière à être égal à un rapport entre des valeurs de sortie en orientant le transducteur de couple (12) vers le nord et en l'orientant vers le sud.

10. Procédé selon la revendication 9, comportant l'étape consistant à déterminer une valeur indiquant une hystérésis à l'aide des sorties communiquées à chacune desdites au moins deux voies (33, 35) en réaction à l'application du couple positif et négatif (20, 22) et au relâchement du couple (20, 22).

11. Procédé selon la revendication 10, comportant l'étape consistant à déterminer un coefficient de correction d'hystérésis en fonction de la valeur d'hystérésis déterminée.

12. Procédé selon la revendication 11, comportant l'étape consistant à déterminer un coefficient de sensibilité d'étendue pour l'ensemble transducteur de couple (10) à l'aide d'une relation entre le coefficient de correction d'hystérésis et une différence entre des sorties communiquées à chacune desdites au moins deux voies (33, 35).
